Europäisches Patentamt

European Patent Office

Office européen des brevets

(11) Publication number: **0 104 407**

**A2**

(12) **EUROPEAN PATENT APPLICATION**

(21) Application number: **83108143.5**

(22) Date of filing: **17.08.83**

(51) Int. Cl.³: **H 04 N 5/91**

(30) Priority: **28.08.82 JP 149403/82**

(43) Date of publication of application:
**04.04.84 Bulletin 84/14**

(84) Designated Contracting States:
**DE FR GB NL**

(71) Applicant: **HITACHI, LTD.**
**6, Kanda Surugadai 4-chome Chiyoda-ku**
**Tokyo 100(JP)**

(72) Inventor: **Sato, Kazuhiro**
**1-12-24, Hachimanyama**
**Setagaya-ku Tokyo(JP)**

(72) Inventor: **Izumita, Morishi**
**354-307, Yanoguchi**
**Inagi-shi Tokyo(JP)**

(72) Inventor: **Nagahara, Shusaku**
**1-1-1, Dai-machi**
**Hachioji-shi Tokyo(JP)**

(74) Representative: **Schulz, Rütger, Dr. et al,**
**STREHL, SCHÜBEL-HOPF, SCHULZ Patentanwalte**
**Widenmayerstrasse 17**
**D-8000 München 22(DE)**

(54) **Electric image recording camera.**

(57) An electric image recording camera includes an imaging device (2) which converts optical information received through a lens (1) into an electric signal, and a recorder (5, 6) which records the information of one frame read out from the imaging device (2). An optical shutter (15) can arbitrarily set for a period of time for the imaging device (2) to receive the optical information. Means (19) are provided for stopping the read-out operation of the imaging device (2) while the optical shutter (15) is open, whereby the exposure time can be varied at will.

*FIG. 3*

EP 0 104 407 A2

0104407

## Electric Image Recording Camera

### Background of the Invention

The present invention relates to an electric image recording camera, and more particularly to an electric image recording camera for still images which can be recorded in a video recorder and played back therefrom.

Common as cameras exclusively used for still images are ones which record an optical image on a sensitive silver salt film by utilizing a photochemical reaction. However, they have the disadvantages that the chemical photographic processing of developing must be performed for reproducing the image, and that the photographed image cannot be immediately seen. Further, there is the problem of the occurrence of environmental hazards attendant upon the processing with chemicals.

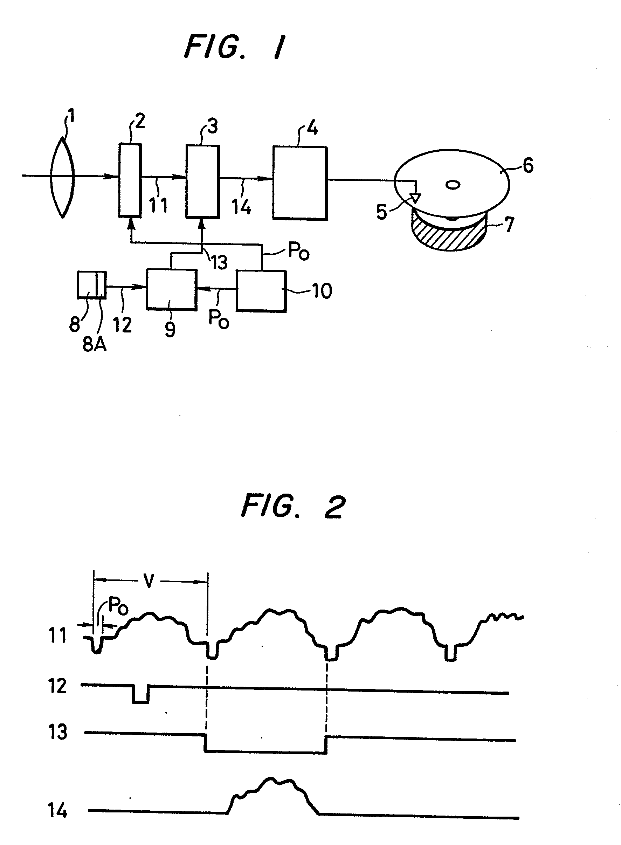

As one expedient for solving these problems, a system shown in Figure 1 has been proposed. (Refer to, e. g., the official gazette of Japanese Laid-open Patent Application No. 57-60783.) In the figure, numeral 2 designates an imaging device by which an optical image focused with a lens 1 is converted into an electric signal. The imaging device 2 is equivalent in principle to a conventional television camera. It has photoelectric elements arranged in two dimensions, and when scanned from one side thereof, it repeatedly delivers the optical image of one frame (period V) as the electric signal as shown at numeral 11 in Figure 2 to be described below. Numeral 3 indicates a circuit which samples only one frame of the converted image information to deliver the electric signal corresponding to one frame of still image. The output of the circuit 3 is converted into a form convenient for magnetic recording (for example, FM-modulated) by means of a signal processing circuit 4. The converted signal is recorded on a rotating magnetic disk 6 through a magnetic head 5.

Here, numeral 7 denotes a motor, numeral 8 a shutter button, numeral 9 a circuit which produces a first image sampling pulse after the depression of the shutter, and numeral 10 a pulse generator circuit which supplies necessary pulses to various parts including the imaging device.

With the prior-art system shown in Figure 1, the optical image is not sampled by a mechanical shutter, but the image signal continuously read out from the imaging device 2 as shown at numeral 11 in Figure 2 is sampled by one frame by the use of the one-frame sampling pulse 13 prepared from a shutter pulse 12, to form the signal 14, which is recorded on the magnetic disk 6. Here, a switch 8A disposed in the shutter button 8 is turned "on" to provide the pulse 12 when the shutter button 8 is depressed. The image signal 11 is repeatedly generated at the period V for scanning the imaging device 2 by one frame, in synchronism with the synchronizing pulse $P_o$ delivered from the pulse generator circuit 10.

As stated above, the image sampling pulse 13 affords a certain exposure time determined by the scanning period V of one frame prepared from the shutter pulse 12. Therefore, the shutter speed (pulse 13) cannot be changed in accordance with the motion of a subject, resulting in the disadvantages that an overlap image appears and that a long-time exposure etc. cannot be performed.

Summary of the Invention

An object of the present invention is to provide an electric image recording camera in which, in order to improve the disadvantages of the prior art as described above, a shutter speed can be varied at will in accordance with the motion and brightness of a subject.

To the accomplishment of the object, the present invention is so constructed that the operations of an imaging device reading out a signal at a fixed period and an optical shutter are synchronized and that the drive of the imaging device is stopped while the optical shutter is open.

Brief Description of the Drawings

Figure 1 is a diagram showing a still image recording apparatus in a prior art;

Figure 2 is a diagram for explaining operations in Figure 1;

Figure 3 is a diagram showing an embodiment of the present invention; and

Figure 4 is a diagram showing waveforms at various parts in Figure 3.

Detailed Description of the Preferred Embodiments of the Invention

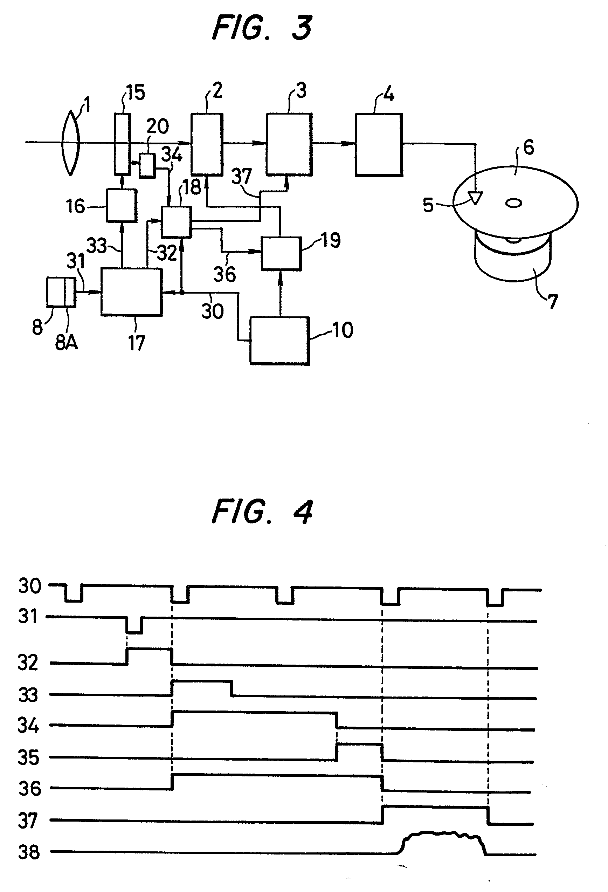

Figure 3 is a block diagram of an electric image recording camera showing an embodiment of the present invention. Figure 4 is a diagram showing waveforms at various parts in the circuit arrangement of Figure 3.

In Figure 3, numeral 1 designates a lens, numeral 2 a solid-state imaging device, numeral 3 an image sampling circuit, numeral 4 a signal processing circuit for adapting a signal to magnetic recording, numeral 5 a magnetic head, numeral 6 a magnetic disk, numeral 7 a motor, numeral 8 a shutter button, numeral 10 a pulse generator circuit, numeral 15 a shutter which is arranged on a path for bringing an optical image to the imaging device 2 and which allows the optical image to pass therethrough for a certain time as desired, numeral 16 an electromagnetic shutter driver, such as plunger, which is disposed for opening and closing the shutter 15, numeral 17 a shutter opening pulse generator circuit which produces a pulse for operating the driver 16 so as to open the shutter 15, numeral 18 a circuit which provides a pulse while the shutter 15 is open, and numeral 19 a circuit which stops the signal reading operation of the imaging device 2 on the basis of the output pulse of the circuit 18.

Usually, the shutter 15 in Figure 3 remains closed, and the light of a subject focused by the lens 1 is not projected on the imaging device 2.

When a supply voltage is fed, pulses are sent from the pulse generator circuit 10 to the imaging device 2, which starts the signal reading operation. Pulses indicated at numeral 30 in Figure 4 serve to determine the read cycle of one frame, and are one of groups of pulses sent from the pulse generator circuit 10 to the imaging device 2.

A signal is read out every frame in synchronism with the pulse 30. However, while the shutter 15 is closed, no light impinges on the imaging device 2, and only a dark current arising in the imaging device is read out.

When the shutter button 8 is depressed, a switch 8A disposed therein turns "on" to generate a pulse 31. This pulse 31 causes the pulse generator circuit 17 to produce the shutter opening pulse 33 synchronized with the pulse 30.

Since, however, when the shutter button 8 is depressed is unknown, the phases of the pulses 30 and 31 scarcely come into agreement.

In the pulse generator circuit 17, therefore, a pulse 32 which rises in response to the pulse 31 and falls in response to the pulse 30 is prepared from the pulse 31 generated by the switch 8A built in the shutter button 8 by the use of a flip-flop circuit or the like, and the shutter opening pulse 33 synchronized with the one-frame read cycle pulse 30 is prepared from the pulse 32 by the use of, e. g., a monostable multivibrator.

The shutter opening pulse 33 is the command pulse for operating the shutter 15, and may have a duration long enough to drive the driver 16 such as electromagnetic plunger.

The shutter opening pulse 33 actuates the driver 16 to operate the shutter 15. The shutter 15 is opened for the predetermined exposure time, and is closed again. Since, however, this exposure time changes variously depending upon the quantity of incident light, the point of time at which the shutter is closed is not equally fixed.

Therefore, a pulse 34 indicating the open state of the shutter is formed by means of a switch 20 interlocked with the shutter 15, and a flip-flop (not shown) in the circuit 18 is operated by the trailing edge of the pulse 34 so as to produce a pulse 35. Then, a pulse 36 is prepared from the two pulses 34 and 35 and is used for actuating the circuit 19 to stop the signal reading operation of the imaging device 2. Accordingly, while the shutter 15 is open, the signal of the imaging device 2 is not read out, and a long-time exposure during which the signal is kept stored in the imaging device 2 becomes possible.

A pulse 37 is the one-frame sampling pulse which is prepared from the pulses 30 and 36. It is used for deriving the signal immediately after restarting the drive of the imaging device 2 and for recording it on the magnetic disk 6.

While, in the above, the magnetic disk has been referred to as a recording medium, it is a matter of course that the invention is similarly applicable to a recording apparatus which employs a cassette type magnetic tape or a magnetic drum.

As set forth above, according to the present invention, the shutter speed can be varied at will in accordance with the motion and brightness of a subject, so that an electric image recording camera free from an overlap image and capable of long-time exposure can be provided.

0104407

## CLAIMS

1. An electric image recording camera having an optical lens (1) which focuses an optical image, an imaging device (2) in which a large number of photoelectric elements are arranged in two dimensions and are successively scanned, whereby the optical image focussed by the optical lens (1) is converted into an electric signal while being repeated every frame, and a recorder (5, 6) which records the electric signal of one frame read out from the imaging device (2), characterised by an optical shutter (15) which is located in the path of the optical image to said imaging device (2) and whose open period of time for passing the optical image can be variably controlled, and means (19) for stopping the read-out operation of said imaging device (2) while said optical shutter (15) is open.

2. An electric image recording camera according to claim 1, comprising a switch (20) which is interlocked with said optical shutter (15) and which is used for actuating the stopping means (19).

3. An electric image recording camera according to claim 1, comprising an image sampling circuit (3) which samples the electric signal of one frame from said imaging device (2) first after the opening of said optical shutter (15) so as to record it by means of said recorder (5, 6).

1/2

## FIG. 1

## FIG. 2

## FIG. 3

## FIG. 4